# EUROPEAN PATENT SPECIFICATION

(11) **EP 0 675 788 B1**
(45) Date of publication and mention of the grant of the patent: **16.03.2005**
(21) Application number: 94902532.4
(22) Date of filing: 13.12.1993
(51) Int. Cl.: B28C 1/00, B28C 3/00, B09B 3/00, C04B 7/24

(54) **PROCESS FOR FORMING SHAPED ARTICLES**
VERFAHREN ZUM HERSTELLEN VON GEFORMTEN GEGENSTÄNDEN
PROCEDE POUR FORMER DES ARTICLES FA ONNES

(30) Priority: 11.12.1992 AU PL630992
(43) Date of publication of application: 11.10.1995
(73) Proprietor: Maroun Rahme, Michelle, Beirut (LB)
(72) Inventor: RAHME, Maroun, Strathfield, NSW 2135 (AU); WU, Shan, Hong, Hornsby, NSW 2077 (AU)
(74) Representative: Fenlon, Christine Lesley
(86) International application number: PCT/AU1993/000640
(87) International publication number: WO 1994/013450

(56) References cited:
- WO-A-92/22514
- AU-A- 897 718
- AU-A- 3 142 871
- AU-A- 6 345 280
- FR-A- 833 927
- US-A- 4 661 291
- CHEMICAL ABSTRACTS, vol. 117, no. 2, 13 July 1992 Columbus, Ohio, US; abstract no. 13473, 'Binders comprising class F fly ash and an alkali metal compound, and manufacture of artifacts with these binders' & ZA-A-9 101 688 (CSIR) 24 December 1991
- CHEMICAL ABSTRACTS, vol. 89, no. 24, 11 December 1978 Columbus, Ohio, US; abstract no. 203019y, 'Raw material mixture for manufacturing foam concrete' & SU-A-620 450 (KAZAN CONSTRUCTION ENGINEERING INSTITUTE) 25 August 1978

## Description

### Technical Field

The present invention is directed towards a process for preparation of shaped articles such as construction materials, bricks, tiles, pavers, pipes and the like. The invention also relates to a process for treatment and disposal of waste materials by converting them into a shaped article or a solid aggregate.

### Background Art

Conventionally clay products are formed by forming clay and some other materials into a desired shape and firing the shaped articles at a temperature where at least some of the shaped material constituents melt and fuse together. Upon cooling the fused materials resolidify and give strength and other properties to the products. In an alternative method cement is used to bind together particles of sand and aggregate to form cement products.

Both of these conventional processes have the disadvantages that they consume relatively high amounts of energy. The present invention is directed to a process for the production of alternative construction materials with low energy consumption.

Large amount of fly ash and other waste materials are also generated during the conventional process and the continued retention and storage of further amounts of this waste material is problematic.

One example of a process for forming a construction material that uses clay is described in Australian Patent 535 130. Australian Patent AU-B 63 452/80 describes a process for producing construction materials from soils. In these processes, it is essential that the mixture of a soil is heated in a manner such that the property of the soil to swell with changing levels of moisture is destroyed without melting any of the soil constituents before a solution of sodium silicate is added. Iron oxide is added either before or after heating.

It is quite clear that the soil used in this process had to be heated enough to destroy swelling properties of clay with changing levels of moisture. The temperature was said to be between 500-700°C. A disadvantage of this process is that the high temperature requirements adds a significant cost to the final process and means that the process has a high energy consumption.

International application WO92/22314 describes a process for forming a low-cost solid aggregate material by using inexpensive starting materials such as non-soil or waste materials, and in particular, from fly ash. These starting materials are combined with iron oxide, an alkali, a water soluble silicate and water and allowed to cure to form the solid aggregate material. Since soils and clays are not used as the starting materials, no heating step is required. A further process for manufacturing artifacts from fly ash is described in South African application ZA 9101688A. In this process an alkali metal hydroxide and/or silicate is mixed with fly ash and water and allowed to set.

### Disclosure of The Invention

The present inventor has recognised that there exists a need for a process that is capable of activating clay or other materials in a manner that would be convenient, simple and cost saving.

According to a first embodiment of the present invention there is provided a process for the production of a solid article comprising the steps of (1) treating a base material with a solution containing alkali metal ions at a pH >7 for a time sufficient to reduce the properties of this material to change its volume with varying moisture levels in the environment and, where the base material comprises SiO₂, to convert part or all of the SiO₂ to alkali metal silicate, (2) optionally mixing with the base material iron oxide or a compound of iron, where the base material contains no iron or compound of iron, (3) optionally introducing into or creating within the base material further alkali metal silicate, or solution thereof, and (4) allowing the mixture to cure, characterised in that the base material is an aluminosilicate-soil and/or an aluminosilicate-clay material and, no heating step is required at least prior to step (4).

Pigments and other additives may be added in any of steps 1 to 3 or before step 1.

Fillers may be added before steps 2 or 3.

Preferred fillers for use in the present invention include fly ash, slag or other pozzulanic materials. The filler may also be the same or a similar material to the base material.

If the end product is to be in the form of a shaped article the mixture is compacted and shaped prior to curing. Compaction and shaping generally improves the strength of the final product. In some applications the strength of the final product may not be as important and it is not necessary to compact the mixture. This is generally the case when the final product is an aggregate material for use in such applications as landfills. Also strength may not be important when the process of the present invention is used to bind or treat a toxic waste material.

Typically, the base material remains in contact with the alkali from about 12 to about 48 hours.

In base materials which contain sufficient amounts of SiO₂, the reaction between the alkali and SiO₂ may produce sufficient alkali metal silicate such that it may not be necessary to add further alkali metal silicate.

If required, the surface of the hardened articles may be further treated with acidic solutions, hot water or surface heating at 200-900°C.

In the process in Australian Patent 535 130 it is essential to heat the soil at 500 to 700°C to activate the soil and to destroy its swelling properties. Such heating is not required in the present invention. The process in Australian Patent 535 130 has the steps of heating the soil and adding iron oxide to form a mixture, then introducing into or creating within the mixture a solution of sodium silicate or a sodium hydroxide/silica solution. In Australian Patent 535 130, the addition of alkali raises the pH value of the alkali metal silicate to between 11.5 and 14. In the present invention the alkali is added before mixing the whole mixture. The base material remains in contact with the alkali for a time sufficient to reduce the properties of these materials to change their volumes with varying moisture levels in the environment.

### Best Modes of Carrying Out the Invention

The base material may comprise a variety of different materials including aluminosilicates such as soil or clay materials, mineral tailings, iron dust, and other pozzulanic materials. The types of suitable aluminosilicate materials would be well known to a person skilled in the art. Examples of such materials may be found in the *Kirk-Othmer Encyclopedia of Chemical Technology,* Fourth edition, Volume 6, pages 381 to 423.

While many types of soils or base materials may be used in the process according to this invention it is desirable that the base material be quite finely comminuted and dried prior to being treated.

Preferably the solution after treatment with alkali is between pH value about 11 to about 14.

To a certain extent, the amount of water incorporated in the mixture will depend upon the manner in which the article is to be formed. Typically the mixture will comprise about 8% or more by weight, based on the base material, of water. Preferably the water is added in step 1.

The amount of iron oxide or compound of iron which is added to the base material is not critical. Preferably more than about 1 % by weight, based on the base material, of iron oxide or compound of iron is added. For some applications. such as the treatment and/or disposal of iron dust the base material may be composed entirely of iron oxide. Generally for theses applications, the strength of the final product is not important and the product may be in aggregate form. Iron dust may also be converted into a shaped article having good strength by adding up to about 100% by weight of iron dust, based on the base material to a base material such as clay.

For applications where the base material is not based on iron the amount of iron oxide or compound of iron which is added is preferably about 1 to about 17% by weight of the base material and most preferably from 3 to 15% by weight. Where the base material already contains iron oxide or a compound thereof, the amount which needs to be added may be adjusted accordingly. The iron oxide or other iron compounds may be obtained from any suitable source. Preferably the iron should be at least as finely comminuted as the base materials used in the process.

The amount of alkali metal silicate either produced and/or added is preferably about 0.5 to about 17% by weight of the base material, most preferably 3 to 15%. A preferred alkali metal silicate is sodium silicate.

The materials which are added to the base material are not required to be in a pure form. Waste products rich in the appropriate constituents such as SiO₂, Al₂O₃, Fe₂O₃, CaO, NaOH can be used satisfactorily.

Dyes, pigments or other additives may also be added during any one of the steps. Suitable additives include appropriately graded gravel or sand, or binders such as cement

One or more fillers may be added in steps 2 or 3. Up to about 98% by weight of filler, based on the base material, may be added. Preferably about 30 to about 70% by weight of filler is added, most preferably about 30 to about 50%. A preferred filler is ash and in particular fly ash.

When the final product is to be a shaped article, it is highly desirable that the mixture be compacted prior to curing. The compaction has been found to increase substantially the final strength of articles formed by the method according to this invention. The compaction may be brought about by compressing or extruding the mixture or by the use of a compaction roller. Alternatively articles may be slip cast to bring about the desired compaction.

Once the shaped article is formed, it is allowed to cure in ambient air, preferably at a temperature of about 30°C. If desired, curing may be accelerated by the use of higher temperatures. Typically temperatures of about 100°C may be employed.

As no heating is required in the formation of the shaped articles of the invention the energy requirements are quite low, thereby contributing to the relatively low cost of these shaped articles.

The invention will now be illustrated in the following examples which should not be construed as limiting on the scope of the invention. In each case, the clay stated was treated by 20% NaOH solution for a period of 24 hours. The treated material were mixed with other ingredients until homogenous and the mixture formed compacted and allowed to air cure at ambient temperature. The -compressive strengths were assessed at 7 and 28 days.

The results are set out in Table 1.

### Example 1

1. 10kg white earth sample from Goulburn (NSW Australia) was mixed with water and 2L of 20% sodium hydroxide solution for five minutes and the mixture was kept for 24 hours.
2. 0.5kg Fe₂O₃ and 4.3kg filler (Gladstone Fly Ash) were added into the mixture and mixed together for two minutes.
3. 0.6L of 50% sodium silicate was then added to the mixture and thoroughly mixed.
4. The homogenised mass was then pressed in a brick mould at 20T pressure. The test specimen formed was 70cm high and 110cm wide and 230cm iong.
5.. The pressed brick was dried in air at room temperature for 7 and 28 days then cut in half and tested for its strength. The results are in Table 1.

### Example 2

The procedure of Example I was repeated with the difference that the amount of sodium silicate was 5% and filler was 41% instead of 4% and 43% in Example 1.

### Examples 5 to 20

The procedure and materials of Example 1 was repeated with the difference that red clay was used instead of white earth. The relative amounts of the different materials are given in the following Table.

| **EXAMPLE** | **IRON** | **Na**_{**2**}**SiO**_{**3**} | **FILLER** | **WATER** | **7 DAYS** | **28 DAYS** |
|---|---|---|---|---|---|---|
| 1 | 5% | 4% | 43% | 8% | 15MPa | 23MPa |
| 2 | 5% | 5% | 41% | 8% | 18MPa | 25MPa |
| 3 | 5% | 4% | 20% | 6% | 20MPa | 30MPa |
| 4 | 5% | 4.5% | 40% | 5% | 30MPa | 45MPa |
| 5 | 4.5% | 1% | 40% | 8% | 3MPa | 9MPa |
| 6 | 4.5% | 3% | 40% | 8% | 12MPa | 18MPa |
| 7 | 4.5% | 6% | 40% | 8% | 20MPa | 27MPa |
| 8 | 4.5% | 9% | 40% | 8% | 22MPa | 29MPa |
| 9 | 4.5% | 12% | 40% | 8% | 25MPa | 31MPa |
| 10 | 4.5% | 15% | 40% | 8% | 26MPa | 33MPa |
| 11 | 4.5% | 17% | 40% | 8% | 28MPa | 37MPa |
| 12 | 1% | 5% | 40% | 8% | 5MPa | 8MPa |
| 13 | 3% | 5% | 40% | 8% | 13MPa | 19MPa |
| 14 | 6% | 5% | 40% | 8% | 19MPa | 28MPa |
| 15 | 9% | 5% | 40% | 8% | 19MPa | 27MPa |
| 16 | 12% | 5% | 40% | 8% | 18MPa | 27MPa |
| 17 | 15% | 5% | 40% | 8% | 17MPa | 27MPa |
| 18 | 17% | 5% | 40% | 8% | 17MPa | 26MPa |
| 19 | 60% | 5% | 40% | 8% | 15MPa | 24MPa |
| 20 | 80% | 5% | 40% | 8% | 14MPa | 22MPa |

## Claims

1. A process for the production of a solid article comprising the steps of (1) treating a base material with a solution containing alkali metal ions at a pH >7 for a time sufficient to reduce the properties of this material to change its volume with varying moisture levels in the environment and, where the base material comprises SiO₂, to convert part or all of the SiO₂ to alkali metal silicate, (2) optionally mixing with the base material iron oxide or a compound of iron, where the base material contains no iron or compound of iron, (3) optionally introducing into or creating within the base material further alkali metal silicate, or solution thereof, and (4) allowing the mixture to cure, **characterised in that** the base material is an aluminosilicate-soil and/or an aluminosilicate-clay material and, no heating step is required at least prior to step (4).

2. A process according to claim 1, wherein said base material is finely comminuted prior to treatment with said alkaline solution.

3. A process according to any one of claims 1 or 2, wherein said mixture has a pH of about 11 to about 14 after treatment with said solution containing alkali metal ions.

4. A process according to any one of claims 1 to 3, wherein said base material is treated with said solution containing alkali metal ions from about 12 to about 48 hours.

5. A process according to any one of claims 1 to 4, wherein said compound of iron is iron oxide.

6. A process according to any one of claims 1 to 5, wherein said mixture comprises about 1 to about 80% by weight, based on the base material, of iron or compound of iron.

7. A process according to claim 6, wherein said mixture comprises about 3 to about 15% by weight based on the base material, of iron or compound of iron.

8. A process according to any one of claims 1 to 7, wherein said mixture comprises about 0.5 to about 17% by weight, based on the base material, of alkali metal silicate.

9. A process according to claim 8, wherein said mixture comprises about 3 to about 5% by weight, based on the base material, of alkali metal silicate.

10. A process according to any one of claims 1 to 9, wherein said alkali metal silicate is sodium silicate.

11. A process according to any one of claims 1 to 10, wherein said mixture comprises about 8% or more by weight water based on the amount of base material.

12. A process according to any one of claims 1 to 11, wherein said mixture further comprises up to about 98% by weight, based on the base material, of a filler.

13. A process as claimed in claim 12, wherein said mixture comprises about 30 to about 50% by weight filler.

14. A process as claimed in claim 12 or claim 13, wherein said filler is ash.

15. A process according to any one of claims 1 to 14, wherein said mixture is allowed to cure at ambient temperature.

16. A process according to any one of claims 1 to 15, wherein said mixture is cured at about 40 to about 100°C.

17. A process as claimed in any one of claims 1 to 16, wherein said article is an aggregate.

18. A process as claimed in any one of claims 1 to 16, wherein said mixture is formed into a shaped article before curing.

## Patentansprüche

1. Verfahren zur Herstellung eines Festkörpers, umfassend die Schritte
(1) Behandeln eines Grundmaterials mit einer Alkalimetallionen-haltigen Lösung, bei einem pH > 7 über einen so langen Zeitraum, dass die Eigenschaften des Materials kleiner werden und sein Volumen sich mit den schwankenden Feuchtigkeitsspiegeln in der Umgebung ändert und, wo das Material SiO₂ enthält, sich Teile oder das gesamte SiO₂ zu Alkalimetallsilicat umwandeln,
(2) wahlfrei Mischen des Grundmaterials mit Eisenoxid oder einer Eisenverbindung, wobei das Grundmaterial kein Eisen oder keine Eisenverbindung enthält,
(3) wahlfrei Einführen in oder Erzeugen innerhalb des Grundmaterials von weiterem Alkalimetallsilicat, oder einer Lösung davon, und
(4) Härten lassen der Mischung, **dadurch gekennzeichnet, dass** das Grundmaterial Aluminosilicat-Erde ist und/oder Aluminosilicat-Tonmaterial und dass zumindest vor Schritt (4) kein Wärmeschritt erforderlich ist.

2. Verfahren nach Anspruch 1, wobei das Grundmaterial vor der Behandlung mit der Alkalilösung fein zerkleinert wird.

3. Verfahren nach Anspruch 1 oder 2, wobei das Gemisch nach der Behandlung mit der Alkalimetallionen-haltigen Lösung einen pH von etwa 11 bis etwa 14 besitzt.

4. Verfahren nach irgendeinem der Ansprüche 1 bis 3, wobei das Grundmaterial etwa 12 bis etwa 48 Stunden mit der Alkalimetallionen-haltigen Lösung behandelt wird.

5. Verfahren nach irgendeinem der Ansprüche 1 und 4, wobei die Eisenverbindung Eisenoxid ist.

6. Verfahren nach irgendeinem der Ansprüche 1 bis 5, wobei das Gemisch etwa 1 bis etwa 80 Gew.%, bezogen auf das Grundmaterial, Eisen oder Eisenverbindung enthält.

7. Verfahren nach Anspruch 6, wobei das Gemisch etwa 3 bis etwa 15 Gew.%, bezogen auf das Grundmaterial, Eisen oder Eisenverbindung enthält.

8. Verfahren nach irgendeinem der Ansprüche 1 bis 7, wobei das Gemisch etwa 0,5 bis etwa 17 Gew.%, bezogen auf das Grundmaterial, Alkalimetallsilicat enthält.

9. Verfahren nach Anspruch 8, wobei das Gemisch etwa 3 bis etwa 5 Gew.%, bezogen auf das Grundmaterial, Alkalimetallsilicat enthält.

10. Verfahren nach irgendeinem der Ansprüche 1 bis 9, wobei das Alkalimetallsilicat Natriumsilicat ist.

11. Verfahren nach irgendeinem der Ansprüche 1 bis 10, wobei das Gemisch etwa 8 Gew.% oder mehr Wasser enthält, bezogen auf die Menge des Grundmaterials.

12. Verfahren nach irgendeinem der Ansprüche 1 bis 11, wobei das Gemisch zudem bis zu 98 Gew.%, bezogen auf das Grundmaterial, Füller enthält.

13. Verfahren nach Anspruch 12, wobei das Gemisch etwa 30 bis etwa 50 Gew.% Füller enthält.

14. Verfahren nach Anspruch 12 oder 13, wobei der Füller Asche ist.

15. Verfahren nach irgendeinem der Ansprüche 1 bis 14, wobei das Gemisch bei Umgebungstemperatur aushärten kann.

16. Verfahren nach irgendeinem der Ansprüche 1 bis 15, wobei das Gemisch bei etwa 40 bis etwa 100°C aushärten kann.

17. Verfahren nach irgendeinem der Ansprüche 1 bis 16, wobei der Körper ein Aggregat ist.

18. Verfahren nach irgendeinem der Ansprüche 1 bis 16, wobei das Gemisch vor dem Härten als Formkörper geformt wird.

## Revendications

1. Procédé de production d'un produit solide, qui comprend les étapes consistant à (1) traiter une matière de base avec une solution contenant des ions alcalins et ayant un pH supérieur à 7, pendant un temps suffisant pour diminuer la capacité de cette matière à changer de volume lorsque le degré d'humidité de l'environnement varie, et, si la matière de base contient de la silice SiO₂, pour transformer une partie ou la totalité de la silice en silicate de métal alcalin, (2) mélanger éventuellement de l'oxyde de fer ou un dérivé du fer avec la matière de base, si la matière de base ne contient pas de fer ou de dérivé du fer, (3) introduire éventuellement dans la matière de base ou créer éventuellement au sein de la matière de base, du silicate de métal alcalin supplémentaire ou une solution d'un tel silicate, et (4) faire durcir le mélange,
procédé **caractérisé en ce que** la matière de base est un sol d'aluminosilicate et/ou une matière constituée d'aluminosilicate et d'argile, et **en ce que** aucune étape de chauffage n'est nécessaire au moins avant l'étape (4).

2. Procédé selon la revendication 1, dans lequel ladite matière de base est finement broyée avant le traitement avec ladite solution alcaline.

3. Procédé selon la revendication 1 ou 2, dans lequel ledit mélange a un pH d'environ 11 à environ 14 après le traitement avec ladite solution contenant des ions alcalins.

4. Procédé selon l'une quelconque des revendications 1 à 3, dans lequel ladite matière de base est traitée avec ladite solution contenant des ions alcalins pendant un durée d'environ 12 à environ 48 heures.

5. Procédé selon l'une quelconque des revendications 1 à 4, dans lequel ledit dérivé du fer est l'oxyde de fer.

6. Procédé selon l'une quelconque des revendications 1 à 5, dans lequel ledit mélange contient d'environ 1 à environ 80 % en poids de fer ou de dérivé du fer par rapport à la matière de base.

7. Procédé selon la revendication 6, dans lequel ledit mélange contient d'environ 3 à environ 15 % en poids de fer ou de dérivé du fer par rapport à la matière de base.

8. Procédé selon l'une quelconque des revendications 1 à 7, dans lequel ledit mélange contient d'environ 0,5 à environ 17 % en poids de silicate de métal alcalin par rapport à la matière de base.

9. Procédé selon la revendication 8, dans lequel ledit mélange contient d'environ 3 à environ 5 % en poids de silicate de métal alcalin par rapport à la matière de base.

10. Procédé selon l'une quelconque des revendications 1 à 9, dans lequel ledit silicate de métal alcalin est du silicate de sodium.

11. Procédé selon l'une quelconque des revendications 1 à 10, dans lequel ledit mélange contient environ 8 % en poids ou plus d'eau par rapport à la quantité de matière de base.

12. Procédé selon l'une quelconque des revendications 1 à 11, dans lequel ledit mélange comprend en outre jusqu'à environ 98 % en poids d'une charge, par rapport à la matière de base.

13. Procédé selon la revendication 12, dans lequel ledit mélange comprend d'environ 30 à environ 50 % en poids d'une charge.

14. Procédé selon la revendication 12 ou 13, dans lequel ladite charge est constituée de cendres.

15. Procédé selon l'une quelconque des revendications 1 à 14, dans lequel on fait durcir ledit mélange à la température ordinaire.

16. Procédé selon l'une quelconque des revendications 1 à 14, dans lequel on fait durcir ledit mélange à une température d'environ 40 à environ 100 °C.

17. Procédé selon l'une quelconque des revendications 1 à 16, dans lequel ledit produit est un agrégat.

18. Procédé selon l'une quelconque des revendications 1 à 16, dans lequel ledit mélange est mis sous la forme d'un produit façonné avant le durcissement.
